(19) **Europäisches Patentamt**
**European Patent Office**
**Office européen des brevets**

(11) **EP 2 461 063 B1**

(12) **EUROPÄISCHE PATENTSCHRIFT**

(45) Veröffentlichungstag und Bekanntmachung des Hinweises auf die Patenterteilung:
**16.07.2014 Patentblatt 2014/29**

(51) Int Cl.:
***F16D 48/06*** *(2006.01)*

(21) Anmeldenummer: **11183319.0**

(22) Anmeldetag: **29.09.2011**

(54) **Ermittlung eines Kupplungszustands in einem Hybridfahrzeug**

Determination of a coupling status in a hybrid vehicle

Détermination d'un état d'embrayage dans un véhicule hybride

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.12.2010 DE 102010062352**

(43) Veröffentlichungstag der Anmeldung:
**06.06.2012 Patentblatt 2012/23**

(73) Patentinhaber: **Robert Bosch GmbH**
**70442 Stuttgart (DE)**

(72) Erfinder:
• **Spindler, Bernd**
**71067 Sindelfingen (DE)**
• **Schmoll Genannt Eisenwerth, Kaspar**
**71665 Vaihingen-Horrheim (DE)**

(56) Entgegenhaltungen:
**EP-A1- 1 589 263    EP-A2- 1 903 239**
**EP-A2- 1 959 151    DE-A1-102004 012 158**
**FR-A1- 2 881 807    US-A1- 2003 220 171**

**Beschreibung**

Stand der Technik

In Hybridfahrzeugen, wie zum Beispiel Parallelhybriden, ist neben einem Verbrennungsmotor ein elektrischer Motor vorgesehen. Beide Motoren können mit der antreibenden Achse in Verbindung stehen. Zum Entkoppeln der Motoren vom Triebstrang kann eine Kupplung zwischen dem Verbrennungsmotor und dem elektrischen Motor vorgesehen sein. Dadurch kann ein vom Fahrer, gewünschtes Antriebsmoment durch den Verbrennungsmotor, den Elektromotor oder durch eine Kombination von beiden aufgebracht werden.

Eine Überwachung des Kupplungszustands kann in mehreren Ebenen erfolgen, um eine möglichst hohe Sicherheit für den Fahrer zu gewährleisten. In einer ersten Ebene kann beispielsweise die mechanische Betätigung der Kupplung, zum Beispiel über einen Wegsensor oder die Beaufschlagung der hydraulischen Leitung, detektiert werden. In einer zweiten Ebene kann ein in der ersten Ebene ermitteltes Ergebnis überprüft, bestätigt bzw. plausibilisiert werden. Beispielsweise kann in der zweiten Ebene eine Aussage über den Kupplungszustand aufgrund der Drehzahlen des Verbrennungsmotors und des elektrischen Motors getroffen werden. Diese Aussagen können jedoch nicht in jeder Situation den Kupplungszustand zutreffend beschreiben.

DE102004012158 offenbart ein Verfahren zum Ermitteln eines Kupplungszustands.

Offenbarung der Erfindung

Es kann daher ein Bedarf an einem verbesserten Verfahren zum Ermitteln eines Kupplungszustands eines Hybridfahrzeugs bestehen, das insbesondere eine zuverlässigere Bestimmung eines Kupplungszustands ermöglicht.

Diese Aufgabe kann durch den Gegenstand der vorliegenden Erfindung gemäß dem unabhängigen Anspruch gelöst werden. Eine vorteilhafte Ausführungsform der vorliegenden Erfindung ist im abhängigen Anspruch 2 beschrieben.

Im Folgenden werden Merkmale, Einzelheiten und mögliche Vorteile einer Vorrichtung gemäß den Ausführungsformen der Erfindung im Detail diskutiert.

Gemäß der Erfindung wird ein Verfahren zum Ermitteln eines Kupplungszustands eines Hybridfahrzeugs vorgestellt. Das Verfahren weist die folgenden Schritte auf: Erfassen eines ersten Drehzahlverlaufs eines Elektromotors; Erfassen eines zweiten Drehzahlverlaufs eines Verbrennungsmotors; Vergleichen des ersten und des zweiten Drehzahlverlaufs zu einem ersten Zeitpunkt; dabei liefert dieser Vergleich einen ersten Wert; Ermitteln eines zweiten Wertes durch Anwenden einer analytischen Funktion auf den ersten Drehzahlverlauf; Ermitteln eines dritten Wertes durch Anwenden derselben analytischen Funktion auf den zweiten Drehzahlverlauf; Vergleichen des zweiten und des dritten Wertes; dabei liefert dieser Vergleich einen vierten Wert; Ausgeben eines ersten Signals für den Fall, dass der erste Wert unter einem vorgebbaren ersten Schwellenwert liegt und der vierte Wert unter einem vorgebbaren zweiten Schwellenwert liegt; Ausgeben eines zweiten Signals für den Fall, dass der erste Wert unter dem vorgebbaren ersten Schwellenwert liegt und der vierte Wert über dem vorgebbaren zweiten Schwellenwert liegt.

Anders ausgedrückt basiert die Idee der Erfindung darauf, einen Zustand einer Kupplung nicht lediglich basierend auf den Drehzahlen der mit ihr verbundenen Motoren zu ermitteln, sondern zusätzlich weitere Eigenschaften der Drehzahlen, die implizit in der Drehzahlverlaufsfunktion beschrieben sind, in die Ermittlung des Zustands einzubeziehen. Durch diese Art der Auswertung der ermittelten Daten wird eine genauere Bestimmung des Kupplungszustands ermöglicht. Dadurch können fehlerhafte Überwachungsergebnisse und ihre Folgen vermieden werden. Unter anderem können beispielsweise kostspielige Werkstattaufenthalte aufgrund von überflüssigen Fehlermeldungen vermieden werden. Ferner kann zum Beispiel ein hoher Kraftstoffverbrauch, wie weiter unten erklärt wird, vermieden werden.

Das Verfahren kann beispielsweise von einer Prozessoreinheit der Fahrzeugelektronik ausgeführt werden. Das Verfahren kann dazu dienen, in einer zweiten Überwachungsebene eine in einer ersten Ebene festgestellte Betätigung der Kupplung, zu verifizieren bzw. zu plausibilisieren. Das Verfahren ermittelt einen Kupplungszustand eines Hybridfahrzeugs. Dabei kann die Kupplung zwischen zwei Antriebsmaschinen des Hybridfahrzeugs angeordnet sein. Beispielsweise ist die Kupplung zwischen dem Verbrennungsmotor und einem elektrischen Motor bzw. einer elektrischen Maschine angeordnet. Zum Beispiel kann die Kupplung im geöffneten Zustand den Verbrennungsmotor vom restlichen Antriebsstrang trennen. Der mit Hilfe des Verfahrens ermittelte Kupplungszustand kann beispielsweise mit einem ersten Signal, das den geöffneten Kupplungszustand signalisiert oder einem zweiten Signal, das einen geschlossenen Kupplungszustand signalisiert ausgegeben werden.

Das Erfassen der Drehzahlverläufe kann beispielsweise einem Aufnehmen einer Drehzahl über einen ersten Zeitraum entsprechen. Das heißt, die jeweilige Drehzahl wird zum Beispiel von einem oder mehreren Sensoren gemessen und in einem Speicher gespeichert bzw. zwischengespeichert. Die Erfassung kann kontinuierlich oder punktuell in vorbestimmten Zeitabständen geschehen. Der erste Drehzahlverlauf und der zweite Drehzahlverlauf werden für den gleichen Zeitraum ermittelt. Der Vergleich kann beispielsweise einer Differenz der Drehzahl des Elektromotors und der Drehzahl des Verbrennungsmotors entsprechen. Dieser Vergleich liefert einen ersten Wert. Der erste Wert entspricht dabei beispielsweise der Differenz der ersten und zweiten Drehzahl zu einem ersten Zeitpunkt. Der erste Wert liefert einen Hinweis auf den Kupplungszustand. Beispielsweise müssten die Drehzahlen von Verbrennungsmotor und Elektromotor gleich sein, wenn die Kupplung geschlossen ist. In diesem Fall ist der erste Wert etwa Null. Allerdings sind auch Situationen möglich, in denen bei gleichen Drehzahlen zu einem bestimmten Zeitpunkt die Kupplung dennoch geöffnet ist. Daher sind die weiteren folgenden Schritte notwendig, um ein sicheres Ergebnis über den Kupplungszustand zu erhalten.

Ein zweiter und dritter Wert wird durch Anwenden einer analytischen Funktion jeweils auf den ersten und zweiten Drehzahlverlauf ermittelt. Ermitteln kann dabei zum Beispiel eine direkte Messung zum Beispiel der Änderung der Drehzahl eines Drehzahlverlaufs bedeuten. Ferner kann Ermitteln ein Abändern der bereits erfassten Drehzahlverläufe bedeuten. Dabei wird sowohl auf den ersten Drehzahlverlauf als auch auf den zweiten Drehzahlverlauf die gleiche analytische Funktion angewendet. Die analytische Funktion kann dabei zum Beispiel eine Ableitungsfunktion sein. Zum Beispiel eine Ableitung ersten Grades nach der Zeit bzw. der Gradient des Drehzahlverlaufs. Anders ausgedrückt also die Änderungen der Drehzahl pro Zeit. Nach der Erfindung weist die analytische Funktion eine Integralfunktion auf. Die Integralfunktion kann zum Beispiel nach der Zeit ausgeführt werden und einer Fläche unter einem Graphen des jeweiligen Drehzahlverlaufs entsprechen. Die analytische Funktion kann auf die Drehzahlverläufe über ein bestimmtes Zeitintervall angewendet werden. Zum Beispiel kann der zweite Wert einem Integral des ersten Drehzahlverlaufs über ein Zeitintervall entsprechen und der dritte Wert einem Integral des zweiten Drehzahlverlaufs über das gleiche Zeitintervall entsprechen. Das Zeitintervall kann dabei zum Beispiel so gewählt werden, dass es kleiner ist als ein Schwingungsintervall eines Verbrennungsmotors bei geöffneter Kupplung und einem fehlerhaften Tankentlüftungsventil. Zum Beispiel kann das Zeitintervall einer Sekunde, zwei Sekunden oder fünf Sekunden entsprechen.

Ein Vergleich des zweiten und dritten Wertes liefert einen vierten Wert. Der Vergleich entspricht einer Differenzbildung des zweiten und dritten Wertes. Dabei können zum Beispiel die Integrale des ersten und zweiten Drehzahlverlaufs über das Zeitintervall voneinander abgezogen werden. Alternativ können zum Beispiel die Ableitungen der Drehzahlverläufe voneinander abgezogen werden. Sind zum Beispiel die Differentiale der Drehzahlverläufe ähnlich, so liegt der vierte Wert in etwa bei Null.

Liegen nun sowohl der erste als auch der vierte Wert unter vorgebbaren Schwellenwerten, so kann mit gewisser Wahrscheinlichkeit davon ausgegangen werden, dass die Kupplung geöffnet ist (bzw. anders ausgedrückt, die Kupplung nicht zwangsweise geschlossen ist) und es wird ein erstes Signal, das einen geöffneten Kupplungszustand repräsentiert, ausgegeben. Liegt jedoch einer der Werte über einem jeweiligen Schwellenwert, so kann man davon ausgehen, dass die Kupplung geschlossen ist und es wird ein zweites Signal ausgegeben. Das erste und/oder das zweite Signal können akustisch oder optisch ausgegeben werden. Beispielsweise kann das erste und zweite Signal in Form eines Ergebnisses auf einem Bildschirm präsentiert werden. Der erste und der zweite Schwellenwert können zum Beispiel von einem Benutzer eingestellt oder automatisch gewählt werden. Alternativ kann der Betrag des ersten Wertes mit dem ersten Schwellenwert und der Betrag des vierten Wertes mit dem zweiten Schwellenwert verglichen werden.

Die Reihenfolge der Schritte des Verfahrens kann variiert werden. Beispielsweise können die Vergleiche der Drehzahlen und des zweiten und dritten Wertes gleichzeitig ausgeführt werden.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

Fig. 1    zeigt einen Antriebstrang eines Hybridfahrzeugs

Fig. 2    zeigt einen starren Antriebsstrang

Fig. 3    zweigt einen Antriebsstrang mit Kupplung

Fig. 4    zeigt einen Drehzahlverlauf bei geschlossener Kupplung

Fig. 5    zeigt einen Drehzahlverlauf beim Öffnen der Kupplung

Fig. 6    zeigt einen Drehzahlverlauf beim Öffnen der Kupplung und (gleichzeitiger) Voll- bzw. Notbremsung

Fig. 7    zeigt einen Drehzahlverlauf beim Öffnen der Kupplung und einem fehlerhaften Tankentlüftungsventil

Fig. 8    zeigt eine Fehlererkennung durch eine erste Sicherheitsebene beim einen Drehzahlverlauf beim Öffnen der Kupplung und einem fehlerhaften Tankentlüftungsventil

Fig. 9    zeigt die Anwendung einer analytischen Funktion auf den Drehzahlverlauf

Alle Figuren sind lediglich schematische Darstellungen erfindungsgemäßer Vorrichtungen bzw. ihrer Bestandteile gemäß Ausführungsbeispielen der Erfindung. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

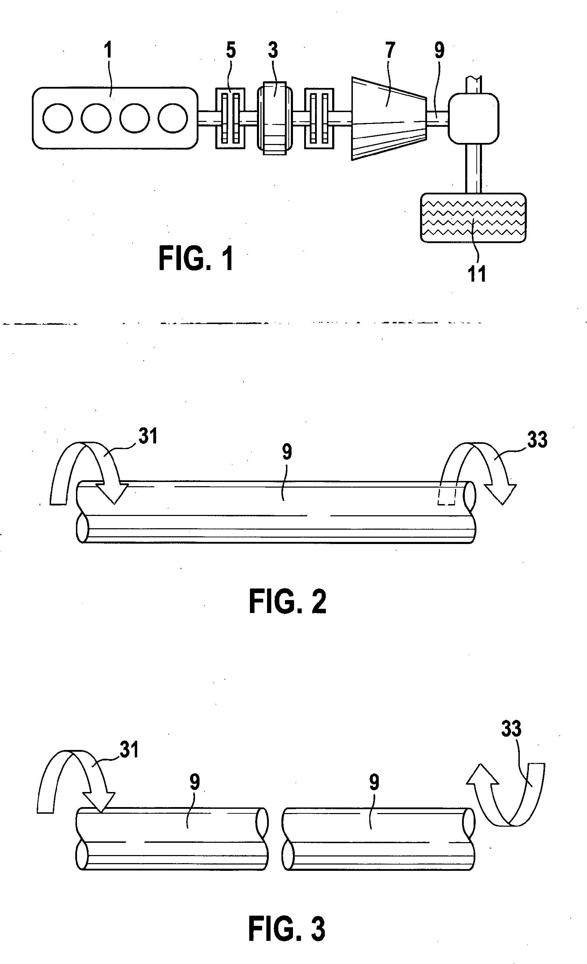

In Hybridfahrzeugen, wie zum Beispiel Parallelhybriden, ist zusätzlich zum Verbrennungsmotor 1 eine elektrische Maschine, zum Beispiel ein elektrischer Motor 3, im Triebstrang 9 angeordnet. Sowohl Verbrennungsmotor 1 als auch elektrischer Motor 3 wirken auf die Antriebsachse 9. Dies ist beispielsweise in Fig. 1 dargestellt. Zum Entkoppeln des Verbrennungsmotors 1 vom restlichen Antriebsstrang 9 ist eine Kupplung 5 zwischen dem Verbrennungsmotor 1 und dem elektrischen Motor 3 vorgesehen. Eine weitere Kupplung ist zwischen einem Getriebe 7 (auch als Schaltbox bezeichnet) und dem elektrischen Motor 3 angeordnet. Der Antriebsstrang 9 steht in Verbindung zu den Rädern 11. Ein Fahrer kann ein gewünschtes Antriebsmoment durch den Verbrennungsmotor 1 oder durch den elektrischen Motor 3 oder eine Kombination der beiden Motoren erzeugen lassen.

Bei einem rein elektrischen Antrieb ist die Kupplung 5 geöffnet, um ein Schleppmoment des Verbrennungsmotors 1 zu entkoppeln. Beim Öffnen der Kupplung 5 "trudelt" der Verbrennungsmotor 1 aus, indem er durch sein Reibmoment gebremst wird. Dabei wird kein Kraftstoffgemisch mehr aktiv eingespritzt. Die Zündung bzw. ein Zündfunken wird bis zum Stillstand des Verbrennungsmotors bereitgestellt, um verbrannten Kraftstoff im Katalysator zu vermeiden und einen Bauteilschutz der Zündspulen zu gewährleisten.

Der Zustand "Kupplung geöffnet" muss mittels einer Sicherheitsüberwachung überprüft werden. Dies kann beispielsweise in einer ersten Sicherheitsebene aufgrund einer mechanischen Betätigung der Kupplung, zum Beispiel mit Hilfe eines Wegsensors, überprüft werden. Ferner muss in einer zweiten Sicherheitsebene überprüft werden, ob der angeforderte Zustand tatsächlich eingestellt werden konnte.

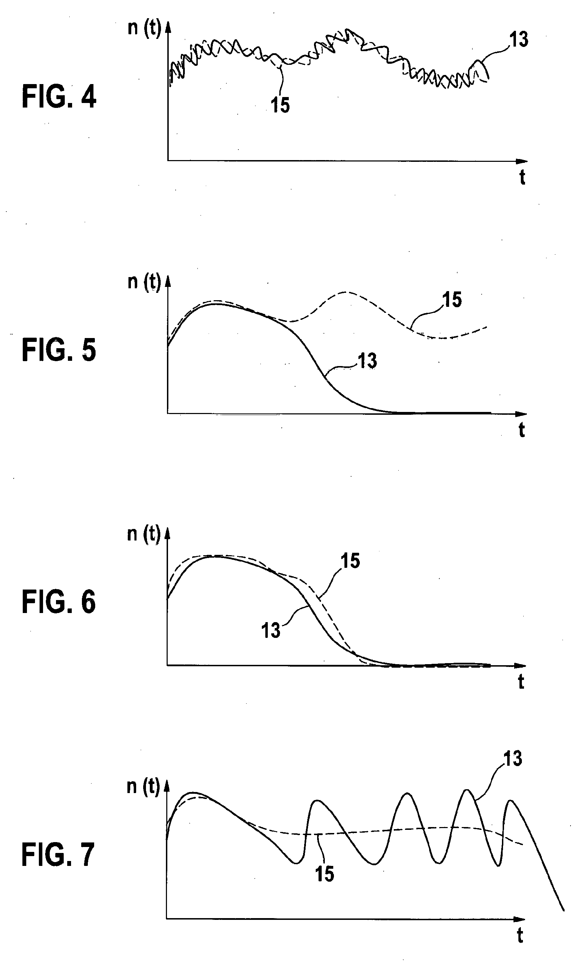

Diese Überwachung in der zweiten Ebene, auch als Plausibilisierung bezeichnet, kann beispielsweise dadurch geschehen, dass ein Drehzahlvergleich des Verbrennungsmotors 1 und des elektrischen Motors 3 stattfindet. Wenn die Drehzahlen ungleich bzw. der Betrag der Differenz der Drehzahlen größer als ein applizierbarer Schwellwert ist, so kann die Kupplung 5 geöffnet sein. Es sind jedoch die im Folgenden dargestellten Situationen denkbar, in denen die oben genannte Bedingung nicht erfüllt ist, die Kupplung aber dennoch geöffnet ist. Eine mögliche Situation für einen derartigen Drehzahlenverlauf 13, 15 ist eine Voll- bzw. Notbremsung des Hybridfahrzeugs gleichzeitig mit der Betätigung der Kupplung. Die Drehzahlverläufe 13, 15 sind beispielsweise für diesen Fall in Fig. 6 dargestellt. Bei solchen Drehzahlverläufen 13, 15 wird das Kriterium Drehzahldifferenz zu einem bestimmten Zeitpunkt größer als ein Schwellenwert nicht erfüllt.

Eine weitere Situation, in der ein bloßer Vergleich der Drehzahlen gegebenenfalls kein zuverlässiges Ergebnis liefert, ist in Fig. 7 dargestellt. In der in Fig. 7 dargestellten Situation ist ein Fehler im Tankentlüftungssystem derart aufgetreten, dass das Tankentlüftungsventil (TEV) dauerhaft geöffnet ist. In Abhängigkeit des Füllzustands des Aktivkohlefilters kann zündfähiges Gemisch über das offene TEV und ein Saugrohr in den Brennraum gelangen und durch den bestehenden Zündfunken ungewollt entflammt werden. Als Folge kann der Verbrennungsmotor 1 trotz Einspritzverbot und geöffneter Kupplung nicht austrudeln.

In den oben beschriebenen Betriebszuständen kann eine Überwachung, basierend lediglich auf einem Vergleich von Drehzahlen, nicht mit Sicherheit erkennen, ob die Kupplung 5 geöffnet oder geschlossen ist. Im Fall einer Meldung einer geschlossenen Kupplung, obwohl die Kupplung 5 geöffnet ist, können folgende Reaktionen des Sicherheitssystems erfolgen: a) ein dauerhaftes Schließen der Kupplung 5, so dass kein elektrisches Fahren, also Fahren mit elektrischem Motor 3, mehr möglich ist; b) Begrenzung der Drehzahl ("hybrid limp home modus"). Vor allem die Variante b) kann zu unnötigem Kraftstoffverbrauch führen. Ferner können bei einer Fehldiagnose unnötige Fehlermeldungen gespeichert werden, die einen Werkstattaufenthalt nötig machen. Diese Fehlüberwachungen können mit dem erfindungsgemäßen Verfahren vermieden werden.

In Fig. 2 und 3 ist schematisch nochmals veranschaulicht, dass lediglich bei einer starren Welle bzw. einem starren Antriebsstrang 9 ohne Kupplung 5, wie in Fig. 2 dargestellt, die Drehzahlen an den unterschiedlichen Enden der Welle direkt miteinander in Zusammenhang stehen. So kann beispielsweise bei einer Abweichung der Drehzahlen 31 und 33 davon ausgegangen werden, dass die Welle beschädigt ist. Im Gegensatz dazu ist in der in Fig. 3 dargestellten Welle eine Kupplung 5 vorgesehen, so dass zwei mögliche Betriebszustände denkbar sind: Kupplung offen und Kupplung geschlossen. In dem Zustand der geöffneten Kupplung 5 kann nicht mehr direkt von den herrschenden Drehzahlen 31, 33 auf den gewünschten Kupplungszustand geschlossen werden, da die Kupplung bei gleicher und ungleicher Drehzahl 31, 33 geöffnet sein kann. Beispielsweise kann der Betrag der Drehzahlen übereinstimmen, die Drehrichtung jedoch umgekehrt sein.

In den Fig. 4 bis 7 sind unterschiedliche Situationen der Drehzahlverläufe 13 und 15 dargestellt. Auf der Abszisse bzw. x-Achse ist die Zeit aufgetragen. Auf der Ordinate bzw. y-Achse ist die Drehzahl 31 bzw. 33 in Abhängigkeit von der Zeit aufgetragen. Der Drehzahlverlauf ($n_{VM}$) 13 des Verbrennungsmotors 1 ist als durchgezogene Linie dargestellt. Der Drehzahlverlauf ($n_{EM}$) 15 des Elektromotors 3 ist als gestrichelte Linie dargestellt.

In Fig. 4 ist zunächst ein Drehzahlverlauf 13, 15 bei geschlossener Kupplung 5 dargestellt. Die Darstellung entspricht einem Realfall, der im Gegensatz zum Idealfall nicht komplett glatt, sondern mit einer geringfügigen Schwingung verläuft.

In Fig. 5 ist der Drehzahlverlauf von Verbrennungsmotor 1 und elektrischem Motor 3 beim Öffnen der Kupplung im Normalfall dargestellt. Der senkrechte Strich im Graphen markiert den Zeitpunkt des Betätigens der Kupplung durch eine übergeordnete Steuerung (Betriebsstrategie). Nach der Betätigung trudelt der Verbrennungsmotor 1 aus und die Drehzahl nimmt ab, wie der Drehzahlverlauf 13 zeigt. Die Drehzahl des Elektromotors 3 nimmt ist nun frei bzw. entkoppelt und entspricht im Wesentlichen dem Fahrerwunsch (bereinigt um die Getriebeübersetzung, wie der Drehzahlverlauf 15 zeigt).

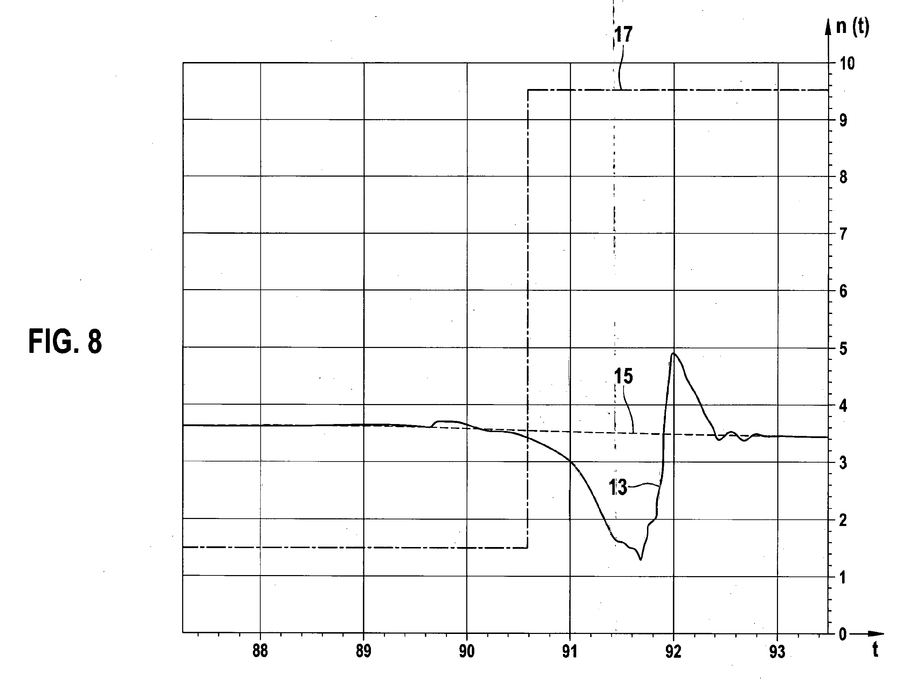

In den Fig. 6 und 7 sind Sonderfälle dargestellt, bei denen das erfindungsgemäße Verfahren eine sichere Feststellung des Zustands der Kupplung 5 ermöglicht. Fig. 6 zeigt einen Drehzahlverlauf 13, 15 beim Öffnen der Kupplung 5 und einer gleichzeitigen Voll- bzw. Notbremsung. Dabei sinkt sowohl die Drehzahl des Verbrennungsmotors 1 als auch die Drehzahl des elektrischen Motors 3 bis auf Null ab. Ein blosser Vergleich der Drehzahlen liefert keine Information über den Zustand der Kupplung 5 in diesem Fall. In Fig. 7 ist der Drehzahlverlauf 13, 15 beim Öffnen der Kupplung 5 und einem fehlerhaften Tankentlüftungsventil dargestellt. Nach dem Öffnen der Kupplung 5, das mittels eines senkrechten Strichs im Graphen dargestellt ist, verläuft die Drehzahl des Elektromotors 3 in etwa konstant. Die Drehzahl des Verbrennungsmotors 1 sinkt nicht auf Null ab, sondern pendelt bzw. schwingt um den Drehzahlverlauf 15 des Elektromotors 3. In Fig. 8 ist ferner eine Fehlererkennung 17 der ersten Sicherheitsebene bei dem in Fig. 7 dargestellten Fall gezeigt.

Das erfindungsgemäße Verfahren vergleicht zusätzlich zu den Drehzahlen auch weitere Werte, die durch Anwenden von analytischen Funktionen auf die Drehzahlverläufe erhalten werden. Beispielsweise kann eine nicht erfindungsgemäße Ausführungsform zusätzlich zu einer Bildung einer Differenz der Drehzahlen der Gradient der Drehzahlverläufe 13, 15 gebildet werden. Haben beide Drehzahlverläufe 13 und 15 den gleichen Gradienten, so kann eine Fehlermeldung ausgeblendet bzw. vermieden werden. Auf diese Weise kann beispielsweise durch Vergleich der Steigungen der Drehzahlverläufe 13 und 15 eine unnötige Fehlermeldung im in Fig. 6 dargestellten Fall vermieden werden.

Ferner kann die analytische Funktion beispielsweise ein Kurvenintegral sein. Hierzu kann zum Beispiel ein Kurvenintegral des Drehzahlverlaufs 13 des Verbrennungsmotors 1 und des Drehzahlverlaufs 15 des Elektromotors 3 in einem applizierbaren Zeitfenster gebildet werden und eine Fehlermeldung ausgeblendet werden, solange die Differenz der Kurvenintegrale bzw. ihrer Beträge unter einem Schwellenwert liegt.

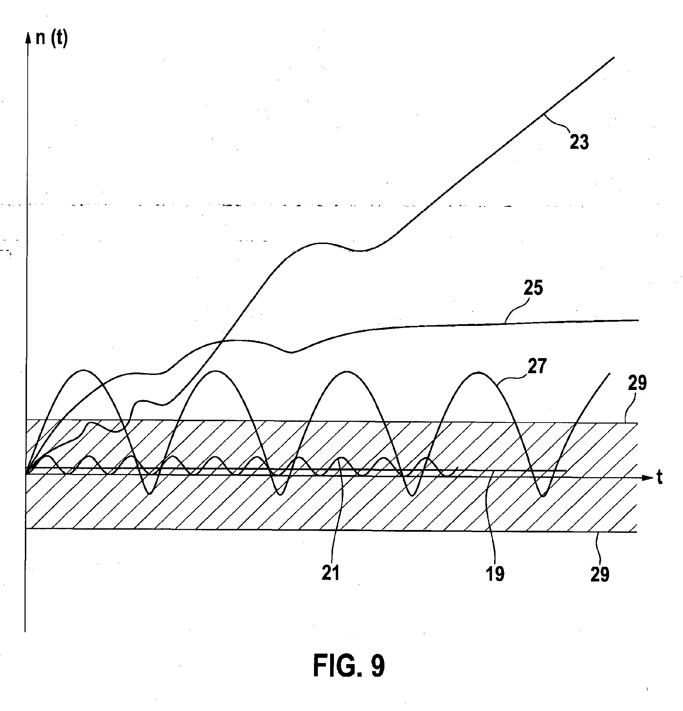

In Fig. 9 ist ein erfindungsgemäßes Beispiel der Integralbildung dargestellt. Auf der Abszisse bzw. x-Achse ist die Zeit aufgetragen. Auf der Ordinate bzw. y-Achse ist das Integral h(t) über die Differenzen der Drehzahlwerte aufgetragen. Das Integral h(t) wird nach folgender Formel bestimmt:

$$h(t) = \int_{t1}^{t1 + tn} f(t)\ dt - \int_{t1}^{t1+tn} g(t)\ dt$$

Dabei wird der Drehzahlverlauf 13 (in der Formel mit g(t) bezeichnet) des Verbrennungsmotors 1 stets vom Drehzahlverlauf 15 (in der Formel mit f(t) bezeichnet) des Elektromotors 3 abgezogen und jeweils ein Integral über einen bestimmten Zeitraum gebildet. Die Integrationsintervalle (z.B. von $t_1$ bis $t_1 + t_n$) sind dabei größer als die Intervalle zwischen den Schnittpunkten der Drehzahlverläufe in Fig. 7. Das Integral h(t) wird ohne Nullstellen- bzw. Schnittstellenbestimmung der Drehzahlverläufe bestimmt, so dass z.B. lediglich die Flächen über dem Drehzahlverlauf 15 berücksichtigt werden. Daraus ergeben sich die in Fig. 9 dargestellten Graphen. Dabei ist die Differenz der Flächen unter den Drehzahlverläufen bei geschlossener Kupplung im Idealfall mit Referenznummer 19 bezeichnet. Die Differenz der Flächen unter den Drehzahlverläufen bei geschlossener Kupplung im Realfall (wie zum Beispiel in Fig. 4 gezeigt) ist mit der Referenznummer 21 bezeichnet. Die Differenz der Flächen unter den Drehzahlverläufen beim Öffnen der Kupplung im Normalfall (wie zum Beispiel in Fig. 5 gezeigt) ist mit der Referenznummer 23 bezeichnet. Die Differenz der Flächen unter den Drehzahlverläufen beim Öffnen der Kupplung und gleichzeitiger Voll- bzw. Notbremsung (wie in Fig. 6 dargestellt) ist mit Referenznummer 25 bezeichnet. Die Differenz der Flächen unter den Drehzahlverläufen beim Öffnen der Kupplung und einem defekten Entlüftungsventil (wie beispielsweise in Fig. 7 dargestellt) ist mit Bezugszeichen 27 bezeichnet.

Der zweite Schwellenwert 19 wird zur Auswertung des Betrags der Graphen herangezogen. Die unter dem Schwellenwert bzw. innerhalb des Bandes 29 liegenden Werte entsprechen einem geschlossenen Kupplungszustand. Die über dem Schwellenwert 29 bzw. außerhalb des Bandes verlaufenden Drehzahlen entsprechen einem offenen Kupplungszustand. In der in Fig. 9 dargestellten Ausführungsform ist eine Kenntnis über den gewünschten Fahrzustand aus einer ersten Sicherheitsebene gegebenenfalls entbehrlich.

Abschließend wird angemerkt, dass Ausdrücke wie "aufweisend" oder ähnliche nicht ausschließen sollen, dass weitere Elemente oder Schritte vorgesehen sein können. Des Weiteren sei darauf hingewiesen, dass "eine" oder "ein" keine Vielzahl ausschließen. Außerdem können in Verbindung mit den verschiedenen Ausführungsformen beschriebene Merkmale beliebig miteinander kombiniert werden. Es wird ferner angemerkt, dass die Bezugszeichen in den Ansprüchen nicht als den Umfang der Ansprüche beschränkend ausgelegt werden sollen.

**Patentansprüche**

1. Verfahren zum Ermitteln eines Kupplungszustands eines Hybridfahrzeugs wobei die kupplung zwischen einem Verbrennungsmotor (1) und einem elektrischen Motor (3) vorgesehen ist; das Verfahren aufweisend die folgenden Schritte:

   Erfassen eines ersten Drehzahlverlaufs (15) des Elektromotors (3);
   Erfassen eines zweiten Drehzahlverlaufs (13) des Verbrennungsmotors (1);
   Vergleichen des ersten und des zweiten Drehzahlverlaufs zu einem ersten Zeitpunkt;
   wobei der Vergleich einen ersten Wert liefert;
   wobei das Verfahren die folgenden weiteren Schritte aufweist Ermitteln eines zweiten Wertes durch Anwenden einer analytischen Funktion auf den ersten Drehzahlverlauf (15);
   Ermitteln eines dritten Wertes durch Anwenden der analytischen Funktion auf den zweiten Drehzahlverlauf (13);
   Vergleichen des zweiten und des dritten Wertes;
   wobei der Vergleich einen vierten Wert liefert;
   Ausgeben eines ersten Signals für den Fall, dass der erste Wert unter einem vorgebbaren ersten Schwellenwert liegt und der vierte Wert unter einem vorgebbaren zweiten Schwellenwert liegt;
   Ausgeben eines zweiten Signals für den Fall, dass der erste Wert unter dem vorgebbaren ersten Schwellenwert liegt und der vierte Wert über dem vorgebbaren zweiten Schwellenwert liegt, **dadurch gekennzeichnet** dadurch, dass
   der Vergleich des ersten und des zweiten Drehzahlverlaufs einer Differenz der Drehzahl des Elektromotors (3) und der Drehzahl des Verbrennungsmotors (1) zum ersten Zeitpunkt entspricht,
   wobei die analytische Funktion eine Integralfunktion aufweist,
   wobei der zweite Wert einem Integral des ersten Drehzahlverlaufs (15) über ein Zeitinterval entspricht;
   wobei der dritte Wert einem Integral des zweiten Drehzahlverlaufs (13) über das Zeitinterval entspricht;
   wobei der Vergleich des zweiten und des dritten Wertes einer Differenz der Integrale des ersten und zweiten Drehzahlverlaufs entspricht,
   wobei das erste Signal einen geöffneten Kupplungszustand repräsentiert;
   wobei das zweite Signal einen geschlossenen Kupplungszustand repräsentiert.

2. Verfahren gemäß Anspruch 1, wobei der Betrag des ersten Wertes mit dem ersten Schwellenwert verglichen wird;

wobei der Betrag des vierten Wertes mit dem zweiten Schwellenwert verglichen wird.

3. Verfahren gemäß einem der Ansprüche 1 und 2, wobei die analytische Funktion eine Ableitungsfunktion aufweist.

4. Verfahren gemäß einem der Ansprüche 1 bis 3, wobei die analytische Funktion eine Integralfunktion aufweist.

5. Verfahren gemäß einem der Ansprüche 1 bis 4, wobei der zweite Wert einem Integral des ersten Drehzahlverlaufs (15) über ein Zeitinterval entspricht;
   wobei der dritte Wert einem Integral des zweiten Drehzahlverlaufs (13) über das Zeitinterval entspricht;
   wobei der Vergleich des zweiten und des dritten Wertes einer Differenz der Integrale des ersten und zweiten Drehzahlverlaufs entspricht.

6. Verfahren gemäß einem der Ansprüche 1 bis 5, wobei das erste Signal einen geöffneten Kupplungszustand repräsentiert;
   wobei das zweite Signal einen geschlossenen Kupplungszustand repräsentiert.

7. Verfahren gemäß einem der Ansprüche 1 bis 5, wobei der Betrag des ersten Wertes mit dem ersten Schwellenwert verglichen wird;
   wobei der Betrag des vierten Wertes mit dem zweiten Schwellenwert verglichen wird.

8. Computerprogrammelement, wobei das Computerprogrammelement ausgestaltet ist, das Verfahren gemäß einem der Ansprüche 1 bis 9 auszuführen, wenn es auf einem Prozessor ausgeführt wird.

9. Computerlesbares Medium, wobei auf dem Medium das Programmelement gemäß Anspruch 10 gespeichert ist.

10. Vorrichtung zum Ermitteln eines Kupplungszustands eines Hybridfahrzeugs, wobei die Vorrichtung ausgestaltet ist das Verfahren gemäß einem der Ansprüche 1 bis 7 auszuführen.

**Claims**

1. Method for ascertaining a clutch state of a hybrid vehicle, wherein the clutch is provided between an internal combustion engine (1) and an electric motor (3), the method comprising the following steps:

   detecting a first rotation speed profile (15) of the electric motor (3);
detecting a second rotation speed profile (13) of the internal combustion engine (1);
comparing the first and the second rotation speed profile at a first time;
wherein the comparison provides a first value;
wherein the method comprises the following further steps:

ascertaining a second value by applying an analytical function to the first rotation speed profile (15);
ascertaining a third value by applying the analytical function to the second rotation speed profile (13);
comparing the second and the third value;
wherein the comparison provides a fourth value;
outputting a first signal if the first value is below a predefinable first threshold value and the fourth value is below a predefinable second threshold value;
outputting a second signal if the first value is below the predefinable first threshold value and the fourth value is above the predefinable second threshold value,
**characterized in that**
the comparison of the first and the second rotation speed profile corresponds to a difference between the rotation speed of the electric motor (3) and the rotation speed of the internal combustion engine (1) at the first time,
wherein the analytical function has an integral function,
wherein the second value corresponds to an integral of the first rotation speed profile (15) with respect to a time interval;
wherein the third value corresponds to an integral of the second rotation speed profile (13) with respect to the time interval;
wherein the comparison of the second and the third value corresponds to a difference between the integrals of the first and the second rotation speed profile,
wherein the first signal represents an open clutch state;
wherein the second signal represents a closed clutch state.

2. Method according to Claim 1,
wherein the magnitude of the first value is compared with the first threshold value;
wherein the magnitude of the fourth value is compared with the second threshold value.

3. Method according to either of Claims 1 and 2,
wherein the analytical function has a derivative function.

4. Method according to one of Claims 1 to 3,
wherein the analytical function has an integral function.

5. Method according to one of Claims 1 to 4,
wherein the second value corresponds to an integral of the first rotation speed profile (15) with respect to a time interval;
wherein the third value corresponds to an integral of the second rotation speed profile (13) with respect to the time interval;
wherein the comparison of the second and the third value corresponds to a difference between the integrals of the first and the second rotation speed profile.

6. Method according to one of Claims 1 to 5,
wherein the first signal represents an open clutch state;
wherein the second signal represents a closed clutch state.

7. Method according to one of Claims 1 to 5,
wherein the magnitude of the first value is compared with the first threshold value;
wherein the magnitude of the fourth value is compared with the second threshold value.

8. Computer program element,
wherein the computer program element is designed to execute the method according to one of Claims 1 to 9 when it is run on a processor.

9. Computer-readable medium,
wherein the program element according to Claim 10 is stored on the medium.

10. Apparatus for ascertaining a clutch state of a hybrid vehicle, wherein the apparatus is designed to execute the method according to one of Claims 1 to 7.

**Revendications**

1. Procédé de détermination d'un état d'embrayage d'un véhicule hybride, l'embrayage étant prévu entre un moteur à combustion interne (1) et un moteur électrique (3), le procédé comportant les étapes suivantes :

détection d'une première courbe de vitesse de rotation (15) du moteur électrique (3) ;
détection d'une deuxième courbe de vitesse de rotation (13) du moteur à combustion interne (1) ;
comparaison des première et deuxième courbes de vitesse de rotation à un premier instant ;
la comparaison donnant une première valeur ;
le procédé comportant les étapes supplémentaires suivantes :

    détermination d'une deuxième valeur par application d'une fonction analytique sur la première courbe de vitesse de rotation (15) ;
    détermination d'une troisième valeur par application de la fonction analytique sur la deuxième courbe de vitesse de rotation (13) ;
    comparaison de la deuxième et de la troisième valeur ;
    la comparaison donnant une quatrième valeur ;
    émission d'un premier signal dans le cas dans lequel la première valeur se situe en dessous d'une première valeur seuil prédéfinissable et la quatrième valeur se situe en dessous d'une deuxième valeur seuil prédéfinissable ;
    émission d'un deuxième signal dans le cas dans lequel la première valeur se situe en dessous de la première valeur seuil prédéfinissable et la quatrième valeur se situe au-dessus de la deuxième valeur seuil prédéfinissable ;
    **caractérisé en ce que** :

    la comparaison des première et deuxième courbes de vitesse de rotation correspond à la différence de la vitesse de rotation du moteur électrique (3) et de la vitesse de rotation du moteur à combustion interne (1) au premier instant ;
    la fonction analytique comportant une fonction intégrale ;
    la deuxième valeur correspondant à une intégrale de la première courbe de vitesse de rotation (15) pendant un intervalle de temps ;
    la troisième valeur correspondant à une intégrale de la deuxième courbe de vitesse de rotation (13) pendant cet intervalle de temps ;
    la comparaison des deuxième et troisième valeurs correspondant à une différence de l'intégrale des première et deuxième courbes de vitesse de rotation ;
    le premier signal représentant un état d'embrayage ouvert ;
    le deuxième signal représentant un état d'embrayage fermé.

2. Procédé selon la revendication 1 :

    le montant de la première valeur étant comparé à la première valeur seuil ;
    le montant de la quatrième valeur étant comparé à la deuxième valeur seuil.

3. Procédé selon l'une quelconque des revendications 1 et 2, la fonction analytique comportant une fonction de dérivation.

4. Procédé selon l'une quelconque des revendications 1 à 3, la fonction analytique comportant une fonction intégrale.

5. Procédé selon l'une quelconque des revendications 1 à 4, la deuxième valeur correspondant à une intégrale de la première courbe de vitesse de rotation (15) pendant un intervalle de temps ;
la troisième valeur correspondant à une intégrale de la deuxième courbe de vitesse de rotation (13) pendant l'intervalle de temps ;
la comparaison des deuxième et troisième valeurs correspondant à une différence de l'intégrale des première et deuxième courbes de vitesse de rotation.

6. Procédé selon l'une quelconque des revendications 1 à 5 :

    le premier signal représentant un état d'embrayage ouvert ;
    le deuxième signal représentant un état d'embrayage fermé.

7. Procédé selon l'une quelconque des revendications 1 à 5 :

    le montant de la première valeur est comparé à la première valeur seuil ;
    le montant de la quatrième valeur est comparé à la deuxième valeur seuil.

8. Élément de programme informatique, l'élément de programme informatique étant configuré pour exécuter le procédé selon l'une quelconque des revendications 1 à 9 lorsqu'il est exécuté sur un processeur.

9. Support lisible par ordinateur, l'élément de programme selon la revendication 10 étant mémorisé sur le support.

10. Dispositif de détermination d'un état d'embrayage d'un véhicule hybride, le dispositif étant conçu pour exécuter le procédé selon l'une quelconque des revendications 1 à 7.

**FIG. 1**

**FIG. 2**

**FIG. 3**

FIG. 4

n (t)

13

15

t

FIG. 5

n (t)

15

13

t

FIG. 6

n (t)

15

13

t

FIG. 7

n (t)

13

15

t

FIG. 8

**FIG. 9**

**IN DER BESCHREIBUNG AUFGEFÜHRTE DOKUMENTE**

**In der Beschreibung aufgeführte Patentdokumente**

- DE 102004012158